# EUROPEAN PATENT SPECIFICATION

(11) **EP 0 946 067 B1**
(45) Date of publication and mention of the grant of the patent: **18.10.2006**
(21) Application number: 99302195.5
(22) Date of filing: 22.03.1999
(51) Int. Cl.: H04N 17/00

(54) **Interconnecting circuit**
Durchverbindungsschaltung
Circuit d'interconnection

(30) Priority: 24.03.1998 JP 7588198
(43) Date of publication of application: 29.09.1999
(73) Proprietor: MITSUBISHI DENKI KABUSHIKI KAISHA, Chiyoda-ku Tokyo 100-8310 (JP)
(72) Inventor: Hamagda, Junichi, 2-chome, Chiyoda-ku, Tokyo 100-0004 (JP); Sugano, Tetsuo, 2-chome, Chiyoda-ku, Tokyo 100-0004 (JP); Nakagakiuchi, Susumu, 2-chome, Chiyoda-ku, Tokyo 100-0004 (JP)
(74) Representative: Burke, Steven David

(56) References cited:
- EP-A- 0 766 093
- WO-A1-98/10526
- GB-A- 2 312 351
- PATENT ABSTRACTS OF JAPAN vol. 1995, no. 03, 28 April 1995 (1995-04-28) & JP 06 343137 A (FUJI PHOTO FILM CO LTD), 13 December 1994 (1994-12-13) & US 6 151 067 A (SUEMOTO) 21 November 2000 (2000-11-21)
- PATENT ABSTRACTS OF JAPAN vol. 017, no. 421 (E-1409), 5 August 1993 (1993-08-05) & JP 05 083748 A (SHARP CORP), 2 April 1993 (1993-04-02)
- PATENT ABSTRACTS OF JAPAN vol. 1995, no. 07, 31 August 1995 (1995-08-31) & JP 07 095442 A (MATSUSHITA ELECTRIC WORKS LTD), 7 April 1995 (1995-04-07)
- PATENT ABSTRACTS OF JAPAN vol. 1998, no. 05, 30 April 1998 (1998-04-30) & JP 10 023436 A (MATSUSHITA ELECTRIC IND CO LTD), 23 January 1998 (1998-01-23)
- PATENT ABSTRACTS OF JAPAN vol. 018, no. 566 (E-1622), 28 October 1994 (1994-10-28) & JP 06 205448 A (TATEYAMA KAGAKU KOGYO KK), 22 July 1994 (1994-07-22)
- PATENT ABSTRACTS OF JAPAN vol. 009, no. 302 (E-362) 29 November 1985 & JP 60 139 011 A (FUJITSU KK) 23 July 1985

## Description

### BACKGROUND OF THE INVENTION

The present invention relates to an interconnecting circuit for connecting an electronic device to an external device, with particular regard to interconnections in audio-visual systems.

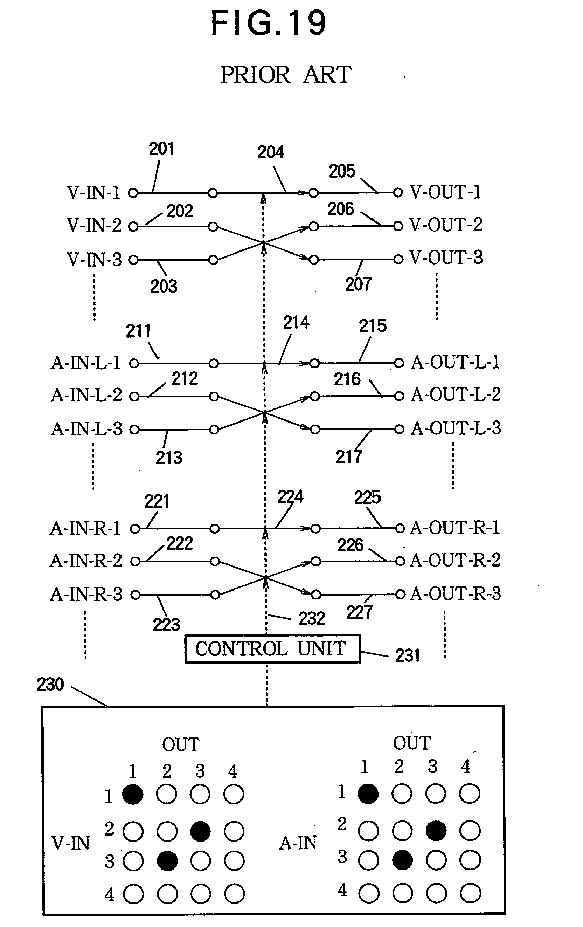

In audio-visual systems comprising multiple audio-visual devices, the devices are often interconnected through a switching device referred to as an audio/video switcher. FIG. 19 shows an example of a conventional audio/video switcher comprising video input terminals 201, 202, 203, a first switch 204, video output terminals 205, 206, 207, left-channel audio input terminals 211, 212, 213, a second switch 214, left-channel audio output terminals 215, 216, 217, right-channel audio input terminals 221, 222, 223, a third switch 224, right-channel audio output terminals 225, 226, 227, a control panel 230, and a control unit 231. The user selects the desired interconnections by pressing buttons on the control panel 230. The control unit 231 controls the switches 204, 214, 224 to interconnect the corresponding input and output terminals. The illustrated selections connect the first video input terminal 201 to the first video output terminal 205, the second video input terminal 202 to the third video output terminal 207, and the third video input terminal 203 to the second video output terminal 206, with corresponding interconnections in the two audio channels.

One problem in this type of audio/video switcher is that to set the system up, the user must correctly identify the signal cables, so that, for example, the video output terminal of an audio-visual device is connected to a video input terminal on the audio/video switcher, and not to an audio input terminal, or an output terminal. Even with color-coded cables, it is easy to make mistakes.

If a cabling mistake is made and the system does not operate properly, to find the mistake, the user may have to trace the cables, which can be difficult if the cables are bundled together or disposed in hard-to-reach locations. Not infrequently, the user is reduced to changing cable connections at random in an effort to correct the mistake.

Another problem is that when the system does not operate properly because of a loose or disconnected cable, a bad electrical contact, or some type of electrical fault in a cable, the user cannot easily tell which cable to check. When an input device fails to receive an expected signal from an output device, for example, the user may not be able to tell whether the fault is with the cable leading from the output device to the switcher, or the cable leading from the switcher to the input device. Bad electrical contacts and electrical faults inside cables are particularly troublesome, because there is generally no outward indication of the problem.

JP-A-60139011 relates to a device having a circuit for detecting an unmatched impedance state between connected circuits. An impedance matching element for termination is connected to the output of one of the circuits and operates in response to the impedance detecting circuit.

EP-A-766093 relates to a diagnostic system for a high frequency antenna and magnetic resonance signal measuring circuitry comprising impedance adjusting means for adjusting variable impedance elements to attain a suitable impedance matching state.

JP-A-06343137 relates to a camera which recognizes which accessory is connected to the camera and automatically selects the appropriate operation mode for the camera.

JP-A-05083748 relates to a device for checking the connection state of cables in an audio-visual system based on the level of a synchronizing extract signal and the position of a mechanical switch.

JP-A-07095442 relates to a system for determining the connection state at terminals using a DC superposing circuit and a display means for indicating proper or defective connection.

WO 98/10526 relates to telephone line conditioner device and a calibration method using a multitone calibration signal. The apparatus automatically adjusts an electronic hybrid to eliminate undesirable echo effects when calls are placed on the line. The hybrid has capacitors and resistors which can be switched into and out of the circuit using simple transistor devices.

### SUMMARY OF THE INVENTION

It is accordingly an object of the present invention to provide an interconnecting circuit that simplifies the task of making interconnections.

Another object of the invention is to provide an interconnecting circuit that simplifies the task of troubleshooting interconnections.

Aspects of the invention are set out in the accompanying claims.

### BRIEF DESCRIPTION OF THE DRAWINGS

In the attached drawings:
FIG. 1 is a block diagram of a signal input-output circuit illustrating a first embodiment of the invention;
FIG. 2 is a block diagram of a signal input-output circuit illustrating a second embodiment;
FIG. 3 is a block diagram of a signal input circuit illustrating a first example;
FIG. 4 is a block diagram of a signal input circuit illustrating a second example;
FIG. 5 is a block diagram of a signal output circuit and an input-output circuit illustrating a third example;
FIG. 6 illustrates frequencies stored in the signal table in FIG. 5;
FIG. 7 illustrates further contents of the signal table in FIG. 5;
FIG. 8 is a block diagram of a signal output circuit and an input-output circuit illustrating a fourth example;
FIG. 9 illustrates pulse codes stored in the signal table in FIG. 8;
FIG. 10 illustrates further contents of the signal table in FIG. 8;
FIG. 11 is a block diagram of a signal output circuit and an input-output circuit illustrating a fifth example;
FIG. 12 illustrates pulse waveforms stored in the signal table in FIG. 11;
FIG. 13 illustrates further contents of the signal table in FIG. 11;
FIG. 14 is a block diagram of a signal output circuit and an input-output circuit illustrating an sixth example;
FIG. 15 illustrates the contents of the bias table in FIG. 14;
FIG. 16 is a block diagram of an audio-visual system illustrating a seventh example;
FIG. 17 illustrates a connection status display provided in the seventh example;
FIG. 18 illustrates an interconnection display provided in the seventh example; and
FIG. 19 is a schematic diagram of a conventional audio/video switcher.

### DETAILED DESCRIPTION OF THE INVENTION

Embodiments of the invention will be described with reference to the attached drawings, in which like parts are indicated by like reference characters.

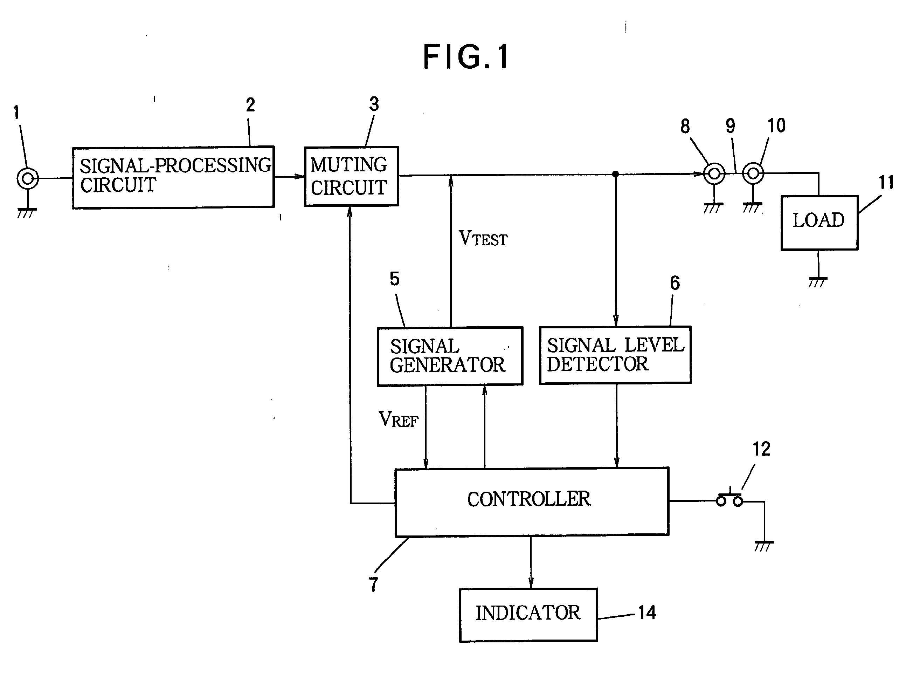

FIG. 1 shows an input-output circuit in an electronic device having an input terminal 1, a signal-processing circuit 2 that processes the signal received at the input terminal 1, a muting circuit 3, a signal generator 5, a signal level detector 6, a controller 7, and an output terminal 8. The signal-processing circuit 2 is coupled through the muting circuit 3 to the output terminal 8. The signal generator 5 comprises, for example, a voltage source coupled in series with a variable impedance element. The voltage generated by the voltage source is supplied to the controller 7 as a reference signal V_{REF}, and is supplied through the variable impedance element to the output terminal 8 as a test signal V_{TEST}. The signal level detector 6 receives the test signal V_{TEST} from a point between the signal generator 5 and output terminal 8, and notifies the controller 7 of the detected level.

The output terminal 8 is connected by a cable 9 to an input terminal 10 of a load 11, which is typically an input circuit in an external device. The electronic device also has a pushbutton switch 12 and an indicator 14. When depressed, the pushbutton switch 12 sends a low-logic-level (ground-level) input signal to the controller 7. When the pushbutton switch 12 is not depressed, this input to the controller 7 is internally pulled up to the high logic level. The indicator 14 is, for example, an electronic tone generator, an indicator lamp, an image display panel, or a combination of these devices.

During normal operation, the signal received at the input terminal 1 is processed by the signal-processing circuit 2, and the processed signal is passed through the muting circuit 3 to the output terminal 8, then through the cable 9 to the input terminal 10 of the load 11.

When the user changes the cable connection at the output terminal 8 or input terminal 10, after the new connection is completed, the user presses the pushbutton switch 12 to check for electrical continuity. The controller 7 responds to the low input from the pushbutton switch 12 by carrying out operations that measure the impedance of the load 11, thereby detecting the connection status of the output terminal 8. Specifically, the controller 7 activates the muting circuit 3, which blocks the output of the signal-processing circuit 2; sets the signal generator 5 to output a test signal V_{TEST} with a known output impedance; compares the voltage level of the reference signal V_{REF} received from the signal generator 5 with the voltage level of the test signal V_{TEST} as detected by the signal level detector 6; and infers the impedance of the load 11.

Typically, the controller 7 sets the signal generator 5 to provide an output impedance equal to the expected input impedance of the load 11. In this case, if the cable 9 is correctly connected, the voltage generated by the voltage source in the signal generator 5 is divided equally by the impedance of the signal generator 5 and the impedance of the load 11, and the signal level detector 6 detects a test signal level V_{TEST} equal to one-half the level of the reference signal V_{REF} received by the controller 7 from the signal generator 5. If the cable 9 is disconnected at either end, or if there is an electrical discontinuity in the cable 9, the test signal V_{TEST} and reference signal V_{REF} have the same voltage level. Conversely, if there is a short circuit in the cable 9 or the load 11, the test signal V_{TEST} has the ground voltage level.

The controller 7 uses the indicator 14 to indicate the result of the impedance measurement. The indicator 14 may indicate either a normal or a faulty connection, for example, or may give one of three indications: normal, open, or short circuit. From these indications, the user can quickly confirm whether the cable 9 has been correctly connected.

When the impedance measurement is completed, the controller 7 de-activates the muting circuit 3 and the signal generator 5 to prepare for normal operation.

By providing quick confirmation of cable connections, the first embodiment helps the user avoid cable connection mistakes.

In addition, if a malfunction occurs at a later time, the user can obtain useful troubleshooting information by pressing the pushbutton switch 12.

By muting the signal from the signal-processing circuit 2 and providing a separate test signal V_{TEST} from the signal generator 5, the first embodiment enhances the accuracy of the impedance measurement.

In a variation, however, the signal generator 5 is omitted, and the controller 7 infers the impedance of the load 11 from the level of the signal output by the signal-processing circuit 2, as measured by the signal level detector 6. In this variation, the output impedance of the signal-processing circuit 2 is preferably controlled by the controller 7, so that the controller 7 knows what signal level to expect.

The indicator 14 need not be part of the same electronic device as the muting circuit 3, signal generator 5, signal level detector 6, and controller 7, but may be part of another device, to which the controller 7 is connected. For example, if the input-output circuit in FIG. 1 is connected to or installed in a computer, the indicator 14 may be an area on the computer's display screen.

The indicator 14 may indicate the numerical value of the load impedance measured by the controller 7, to provide more detailed information for troubleshooting.

The indicator 14 can be replaced by, for example, a circuit that controls a switch or takes some other action according to the result of the impedance measurement.

The circuit can also be used as an output circuit in an audio-visual device such as a television tuner, or a device for reproducing signals from tapes or discs, in which case the input terminal 1 need not be present.

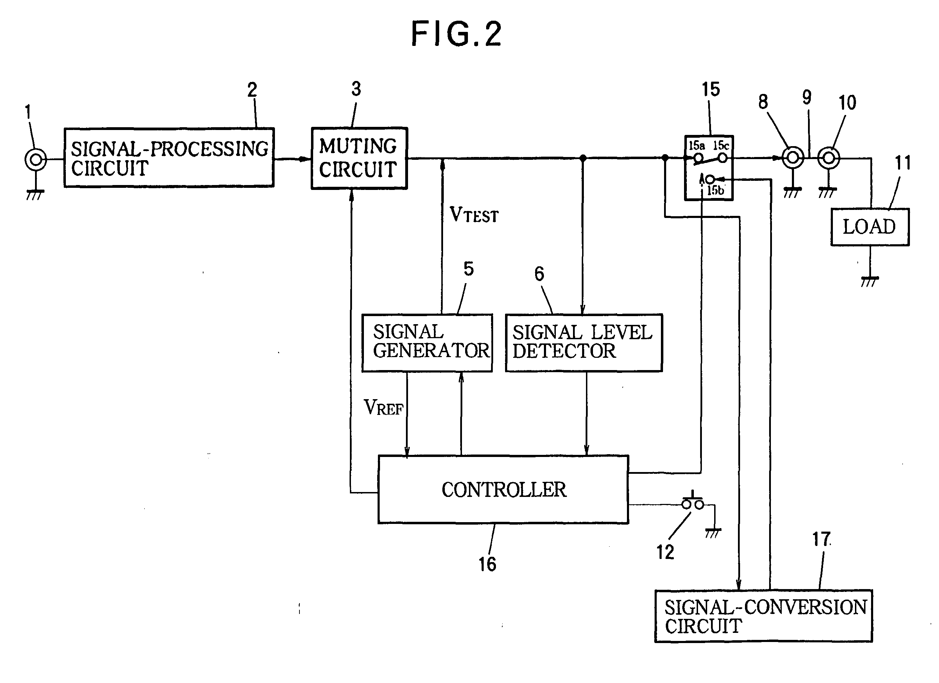

As an embodiment of the invention, FIG. 2 shows a block diagram of an input-output circuit generally similar to the circuit described above, but having an additional switch 15, which is controlled by the controller 16. The switch 15 has a first input terminal 15a that receives the output signal from the muting circuit 3 or the test signal V_{TEST} signal generator 5, a second input terminal 15b coupled to a signal-conversion circuit 17, and an output terminal 15c coupled to the output terminal 8. The signal-conversion circuit 17 also receives the output signal from the muting circuit 3 and the test signal from the signal generator 5, and provides a converted signal to the second input terminal 15b of the switch 15. The conversion process performed by the signal-conversion circuit 17 is, for example, an impedance conversion process.

The embodiment does not have an indicator.

During normal operation with the switch 15 set as shown, the signal output from the signal-processing circuit 2 passes through the muting circuit 3 and switch 15 to the output terminal 8, then through the cable 9 and input terminal 10 to the load 11, as in the circuit described above.

During normal operation with the switch 15 set to the opposite position, so that the second input terminal 15b is connected to the output terminal 15c, the signal from the signal-processing circuit 2 passes through the muting circuit 3, signal-conversion circuit 17, and switch 15 to the output terminal 8, then through the cable 9 and input terminal 10 to the load 11. The load 11 thus receives a signal with, for example, the same waveform as the signal output by the signal-processing circuit 2, but a different output impedance.

When the user changes the cable connection at the output terminal 8 or input terminal 10, after completing the new connection, he presses the pushbutton switch 12. The controller 16 responds by setting the switch 15 as shown in the drawing, activating the muting circuit 3 and signal generator 5, and varying the output impedance of the signal generator 5, until the level of the test signal V_{TEST} detected by the signal level detector 6 is substantially one-half the level of the reference signal V_{REF} supplied by the signal generator 5. At this point, the output impedance of the signal generator 5 is substantially equal to the input impedance of the load 11. In this way, the controller 16 measures the impedance of the load 11.

From the measured impedance, the controller 16 next decides how to set the switch 15. For example, if the impedance of the load 11 is substantially equal to the output impedance of the muting circuit 3, the controller 16 leaves the switch 15 set as shown. If the impedance of the load 11 differs from the output impedance of the muting circuit 3, the controller 16 sets the switch 15 so that the output terminal 15c is coupled to the second input terminal 15b, and the impedance of the output signal is converted by the signal-conversion circuit 17 before the output signal is supplied to the output terminal 8.

After completing the impedance measurement and switch setting, the controller 16 de-activates the muting circuit 3 and the signal generator 5, and normal operation proceeds with the switch 15 at the selected setting.

The embodiment is useful when, for example, an electronic device such as a switching or routing device is connectable both to video devices having a seventy-five-ohm (75 Ω) input impedance, and audio devices having a fifty-ohm (50 Ω) input impedance. In this case, the function of the signal-conversion circuit 17 is to convert the impedance of the output signal from 75 Ω to 50 Ω, or from 50 Ω to 75 Ω.

More generally, the signal-conversion circuit 17 may convert the output impedance of the output signal to a selectable impedance, the selection being made by the controller 16 so as to match the measured impedance of the load 11. For example, the signal-conversion circuit 17 may provide a selectable one of several standard impedance values employed in audio-visual equipment. The signal-conversion circuit 17 may also convert the signal level of the output signal to a level appropriate for input to the load 11.

The impedance measurement and the setting of the switch 15 may be carried out, not only in response to input from the pushbutton switch 12, but also at other times, such as when power is switched on in the electronic device.

By automatically matching the output impedance at the output terminal 8 to the impedance of the load 11, the second embodiment relieves the user of the need to adjust the output impedance manually, and simplifies the process of interconnecting various types of devices.

Similarly, if the signal-conversion circuit 17 adjusts the output signal level, the second embodiment relieves the user of the need to make this adjustment manually.

The embodiment can also be provided with an indicator as in the first embodiment, to indicate a normal or faulty connection. For example, a faulty connection can be indicated if the controller 16 detects an impedance value that the signal-conversion circuit 17 cannot match, indicating that the output terminal 8 is in an open or short-circuited state, or that an unexpected type of device has been connected to the output terminal 8. The measured impedance value may also be displayed, to help the user troubleshoot the problem.

In a variation of the embodiment, the signal-conversion circuit 17 is a signal source similar to the signal-processing circuit 2, and the controller 16 uses the result of the impedance measurement to decide which signal to provide to the load 11. For example, the controller 16 can provide a video signal if the detected impedance is 75 Ω, and an audio signal if the detected impedance is 50 Ω.

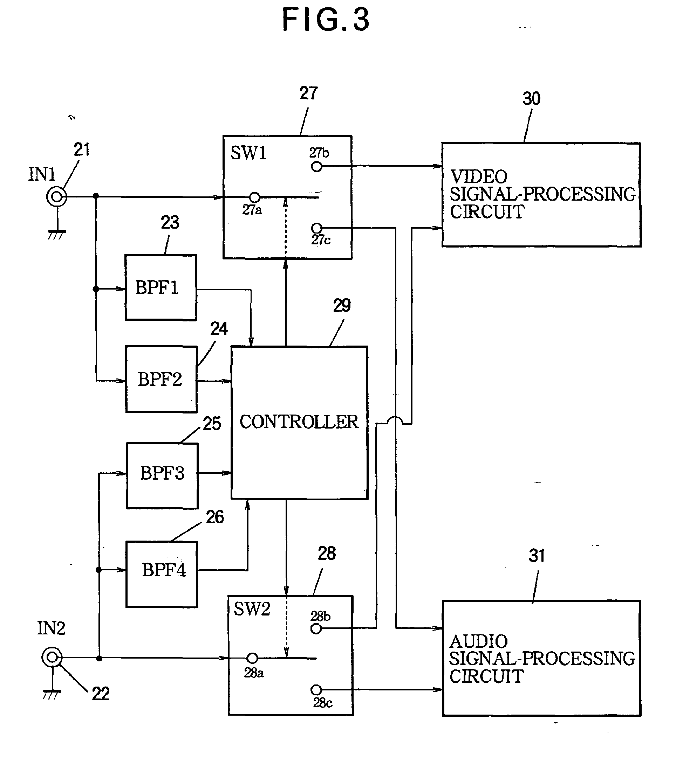

As a first example, FIG. 3 shows a block diagram of an input circuit having two input terminals 21, 22, four bandpass filters 23, 24, 25, 26, two switches 27, 28, and a controller 29. This input circuit is employed in an audio-visual device having a video signal-processing circuit 30 and an audio signal-processing circuit 31.

The first bandpass filter (BPF1) 23 and third bandpass filter (BPF3) 25 have a passband in the video-signal frequency range. The second bandpass filter (BPF2) 24 and fourth bandpass filter (BPF4) 26 have a passband in the audio-signal frequency range. The first and second bandpass filters 23, 24 filter the signal input at the first input terminal (IN1) 21. The third and fourth bandpass filters 25, 26 filter the signal input at the second input terminal (IN2) 22. The controller 29 receives the outputs of all four bandpass filters and controls the two switches 27, 28.

The first switch (SW1) 27 has an input terminal 27a coupled to the first input terminal 21, a first output terminal 27b coupled to the video signal-processing circuit 30, and a second output terminal 27c coupled to the audio signal-processing circuit 31. The second switch (SW2) 28 has an input terminal 28a coupled to the second input terminal 22, a first output terminal 28b coupled to the video signal-processing circuit 30, and a second output terminal 28c coupled to the audio signal-processing circuit 31.

The user connects cables from another audio-visual device or devices (not visible) to the input terminals 21, 22. When power is switched on, the input circuit operates as follows.

If, for example, an audio signal is input at the first input terminal 21 and a video signal is input at the second input terminal 22, the controller 29 detects output from the second and third bandpass filters 24, 25 and no output from the first and fourth bandpass filters 23 and 26. The controller 29 responds to this combination of filter outputs by setting the first switch 27 so that its input terminal 27a is connected to the second output terminal 27c, and setting the second switch 28 so that its input terminal 28a is connected to the first output terminal 28b. The audio signal received at input terminal 21 is thus routed to the audio signal-processing circuit 31, and the video signal received at input terminal 22 is routed to the video signal-processing circuit 30.

Similarly, if a video signal is input at the first input terminal 21 and an audio signal is input at the second input terminal 22, the controller 29 detects output from the first and fourth bandpass filters 23 and 26 and no output from the second and third bandpass filters 24, 25. The controller 29 responds by setting the switches 27, 28 to the opposite of the above positions, so that the video signal received at input terminal 21 is routed to the video signal-processing circuit 30, and the audio signal received at input terminal 22 is routed to the audio signal-processing circuit 31.

The first example simplifies the interconnection process by allowing the user to connect cables without having to distinguish between audio and video signal cables. The audio and video signals are routed correctly by the input circuit itself.

In a variation of the first example, an indicator is provided by which the controller 29 alerts the user to abnormal conditions, such as output from both the first and third bandpass filters 23, 25, indicating input of video signals at both input terminals 21, 22, or lack of output from any of the four bandpass filters, indicating disconnected cables or some other type of connection fault.

In another variation, the number of bandpass filters connected to each input terminal is increased, enabling the controller 29 to distinguish between more than two different types of input signals. The number of input terminals and signal-processing circuits may also be increased.

In another variation, the switches connected to the input terminals route the input signals to circuits that perform appropriate signal conversion functions, such as impedance conversion or level conversion.

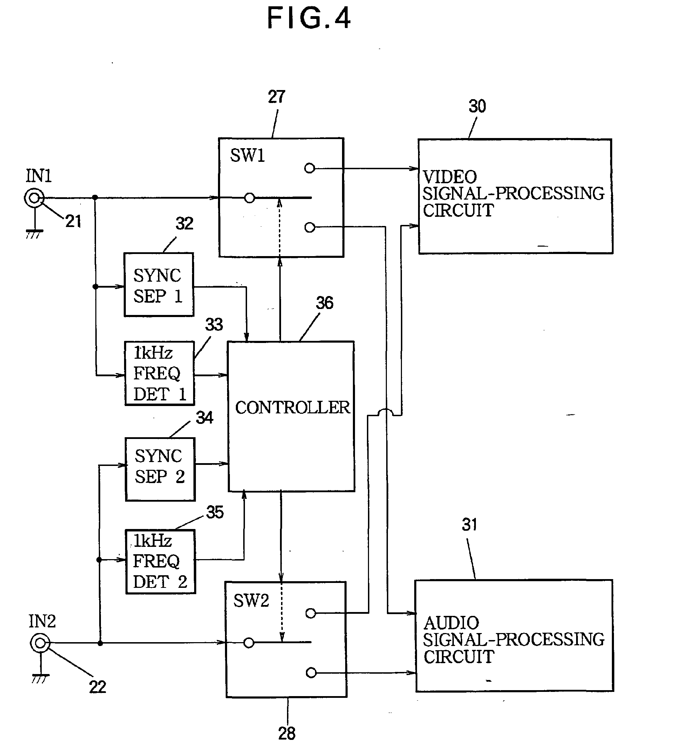

As a second example, FIG. 4 shows a block diagram of another input circuit, in which the bandpass filters of the first example are replaced by a first sync separation circuit (SYNC SEP 1) 32, a first one-kilohertz frequency detector (1kHz FREQ DET 1) 33, a second sync separation circuit (SYNC SEP 2) 34, and a second one-kilohertz frequency detector (1kHz FREQ DET 2) 35.

The sync separation circuits 32, 34, like the sync separators found in television receivers, extract the horizontal and vertical synchronization signals from a composite video signal. The sync separation circuits 32, 34 may simply output the extracted synchronization signals. Alternatively, they may output logic signals indicating whether synchronization signals are present or absent.

The one-kilohertz frequency detectors 33, 35 comprise, for example, bandpass filters with passbands centered around one kilohertz. The one-kilohertz frequency detectors 33, 35 may simply output the one-kilohertz signal component extracted by the bandpass filter. Alternatively, they may output logic signals indicating whether a one-kilohertz component is present or absent.

The controller 36 controls the two switches 27, 28 according to the outputs from the two sync separation circuits 32, 34 and one-kilohertz frequency detectors 33, 35.

The second example operates in substantially the same way as the first example. If, for example, an audio signal is input at the first input terminal 21 and a video signal is input at the second input terminal 22, the controller 36 receives outputs from the first one-kilohertz frequency detector 33 and the second sync separation circuit 34, sets the first switch 27 to route the audio signal from input terminal 21 to the audio signal-processing circuit 31, and sets the second switch 28 to route the video signal from input terminal 22 to the video signal-processing circuit 30. If a video signal is input at the first input terminal 21 and an audio signal is input at the second input terminal 22, the controller 36 receives outputs from the first sync separation circuit 32 and the second one-kilohertz frequency detector 35, sets the first switch 27 to route the video signal from input terminal 21 to the video signal-processing circuit 30, and sets the second switch 28 to route the audio signal from input terminal 22 to the audio signal-processing circuit 31.

Like the first example, the second example simplifies the interconnection of audio-visual devices by automatically routing audio and video input signals to the appropriate signal-processing circuits.

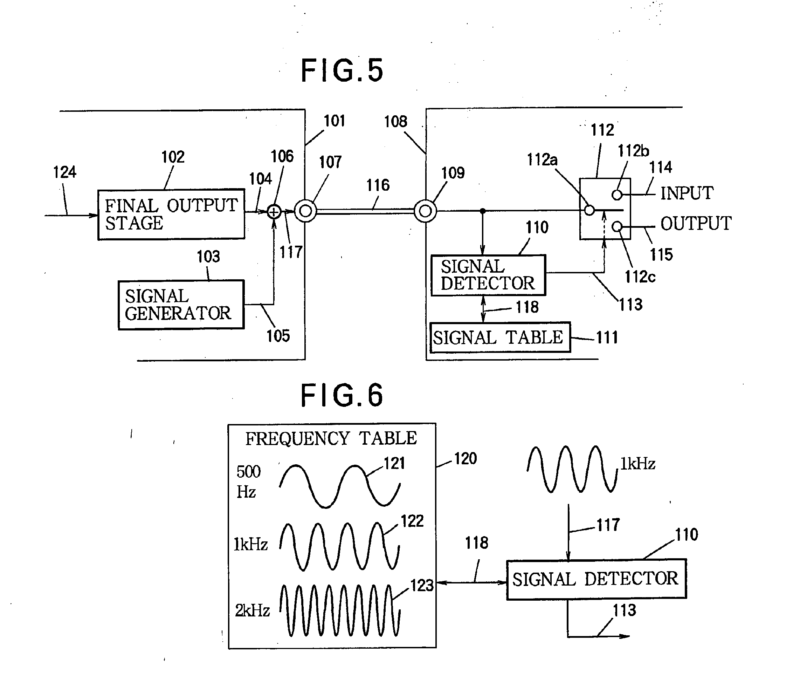

Illustrating a third example, FIG. 5 shows a block diagram of an output device connected by a cable to an input-output device.

The output device 101 comprises a final output stage 102 and a signal generator 103, which generate an output signal 104 and an identification signal 105, respectively. A combiner 106 combines the output signal 104 and identification signal 105, and provides the combined signal to an output terminal 107. The signal generator 103 generates a one-kilohertz sine-wave signal for a certain time, referred to below as an initialization interval, after the power of the output device 101 is switched on. The final output stage 102 does not generate an output signal 104 during the initialization interval.

The input-output device 108 has an input-output terminal 109, a signal detector 110, a signal table 111, and a switch 112. The switch 112 receives a control signal 113 from the signal detector 110. The switch 112 has a first terminal 112a coupled to the input-output terminal 109, a second terminal 112b that receives an input signal 114, and a third terminal 112c for output of an output signal 115.

In the illustrated configuration, the output terminal 107 of the output device 101 is connected by a cable 116 to the input-output terminal 109 of the input-output device 108. The output signal 117 output from the combiner 106 is thereby supplied to the first terminal 112a of the switch 112. The switch 112 must be set so that the first terminal 112a is connected to the second terminal 112b, enabling the output signal 117 from the output device 101 to become the input signal 114.

The signal table 111, which is coupled to the signal detector 110 by a signal line 118, comprises a frequency table 120 as illustrated in FIG. 6. The frequency table 120 lists certain frequencies, such as a five hundred hertz, one kilohertz, and two kilohertz. In the drawing, these frequencies are represented by their waveforms 121, 122, 123, but the frequency table 120 may list these frequencies in any convenient form.

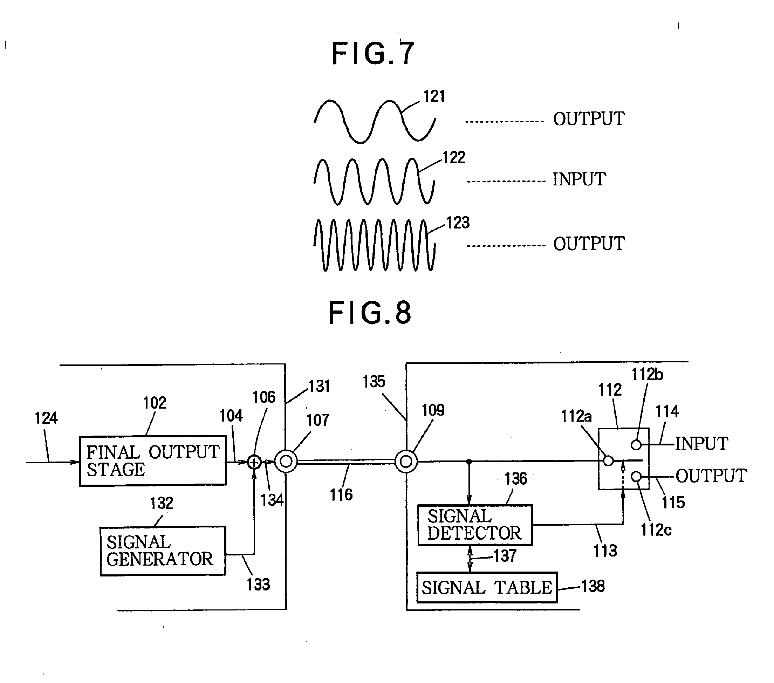

Referring to FIG. 7, for each of the frequencies listed in the frequency table 120, the signal table 111 specifies a setting of the switch 112. An input specification means that the first and second terminals 112a and 112b are to be connected. An output specification means that the first and third terminals 112a and 112c are to be connected.

The operation of the third example will be described under the assumption that the output device 101 and input-output device 108 are powered from the same source, so that power to both the output device 101 and input-output device 108 is switched on and off together.

When power is switched on, during the initialization interval, the final output stage 102 does not operate, but the signal generator 103 generates a one-kilohertz sine-wave identification signal 105, which is sent as the output signal 117 through the combiner 106 and cable 116 to the input-output device 108. The signal detector 110 detects the frequency of the output signal 117 and attempts to find an approximately matching frequency in the frequency table 120. Alternatively, the signal detector 110 reads the frequency table 120 in the signal table 111 and attempts to detect the listed frequencies or approximations thereof in the output signal 117. In the present case, the signal detector 110 finds the one-kilohertz frequency 122 in the output signal 117. The signal detector 110 then reads the corresponding switch setting from the signal table 111 and sets the switch 112 as specified, in the present case to the input setting.

After the initialization interval, the signal generator 103 discontinues output of the identification signal 105. The final output stage 102 performs final processing of an output source signal 124 to generate an output signal 104. The signal detector 110 leaves the switch 112 set to the input position, so the output signal 104 output by the final output stage 102 becomes the input signal 114, as desired.

The input-output terminal 109 of the input-output device 108 can also be connected to an input device having an internal signal generator that generates a sine-wave identification signal with a frequency of five hundred hertz, or two kilohertz, during the initialization interval. The frequency of the identification signal indicates the type of input signal expected from the input-output device 108. During the initialization interval, the input-output device 108 receives the identification signal from the input device. The signal detector 110 detects the frequency of the identification signal, reads the signal table 111, and sets the switch 112 to the output position, so that the first terminal 112a is connected to the third terminal 112c. After the initialization interval, the input-output device 108 provides an output signal of the desired type to the input device.

When the input-output device 108 is an audio/video switcher, the third example enables the switcher to recognize input and output devices and route signals from output devices to input devices, as will be described later. The third example can also be employed in input-output devices other than audio/video switchers.

Illustrating a fourth example, FIG. 8 shows an output device and input-output device generally similar to those in the third example. The output device 131, however, has a signal generator 132 that generates a pulse-code identification signal 133, so that during the initialization interval, the signal 134 output by the combiner 106 is a pulse-code signal. In the input-output device 135, the signal detector 136 recognizes pulse codes rather than frequencies, and communicates through a signal line 137 with a signal table 138 that lists pulse codes and switch settings, instead of frequencies and switch settings.

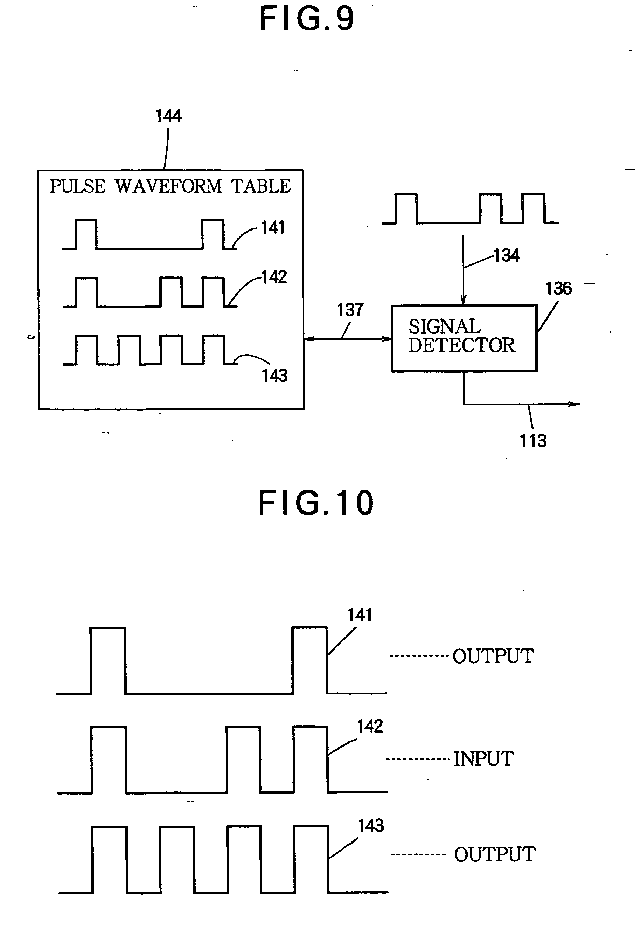

As shown in FIG. 9, the signal table 138 lists pulse codes 141, 142, 143 in a pulse waveform table 144. The pulse codes are shown as waveforms, but the pulse waveform table 144 may store the pulse codes in any convenient form, such as a bit-coded form. As shown in FIG. 10, the signal table 138 also stores an input or output setting for each pulse code 141, 142, 143.

The fourth example operates in essentially the same way as the third example. During the initialization interval, the signal detector 136 detects a pulse code in the output signal 134, and sets the switch 112 as specified in the signal table 138. In the present case, the signal generator 132 generates the second pulse code 142, and the signal detector 136 sets the switch 112 to the input position. An input device connected to the input-output device 135 would generate the first pulse code 141 or third pulse code 143 during the initialization interval, causing the signal detector 136 to set the switch 112 to the output position.

The fourth example provides the same effects as the third example, but has the advantage that pulse codes can be detected by a digital signal detector.

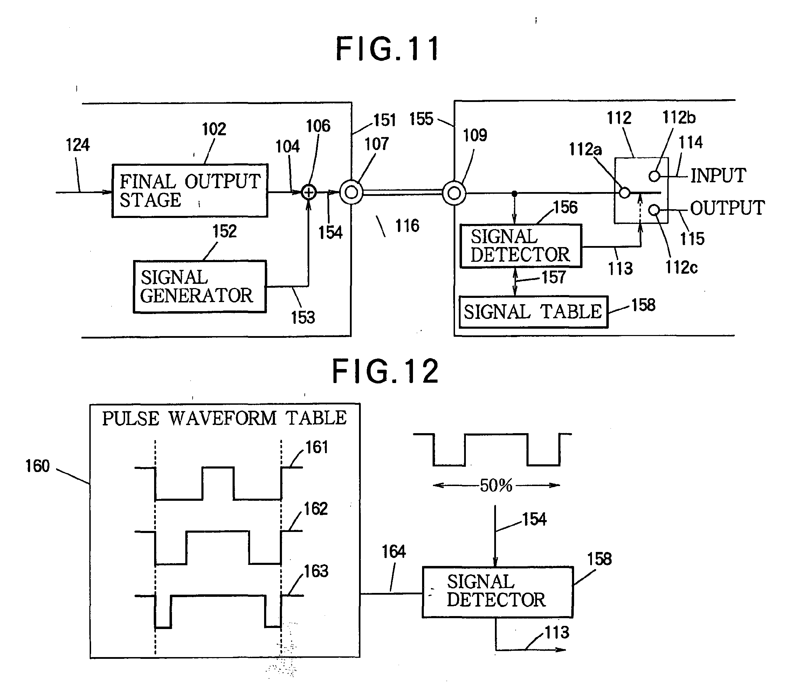

Illustrating a fifth example, FIG. 11 shows an output device and input-output device generally similar to those in the fourth example. The output device 151 now has a signal generator 152 that generates a pulse signal with a specific pulse length and duty cycle as an identification signal 153. During the initialization interval, the output signal 154 output by the combiner 106 comprises the pulse signal output by the signal generator 152. In the input-output device 155, the signal detector 156 recognizes the duty cycle of the pulse waveform, and communicates through a signal line 157 with a signal table 158 that lists duty cycles and switch settings.

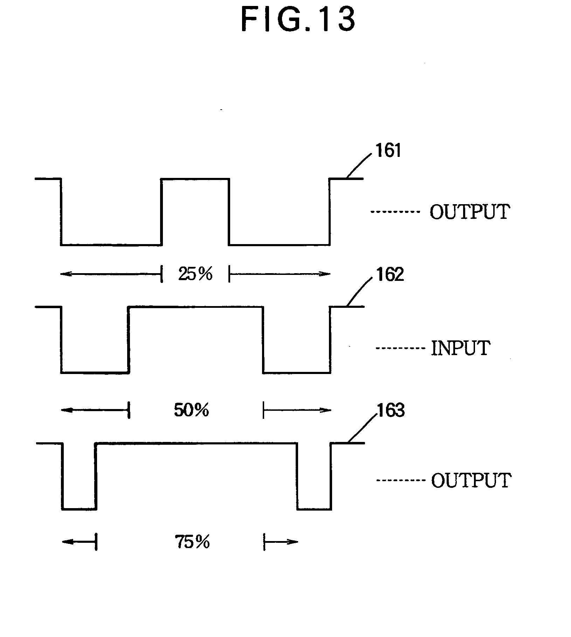

As shown in FIG. 12, the signal table 158 has a pulse waveform table 160 listing pulse waveforms 161, 162, 163. Each waveform comprises a low interval followed by a high interval, then another low interval, these three intervals having a constant total length. The duty cycle of the waveform is the length of the high interval divided by the total length of the three intervals. For example, waveform 162 has a duty cycle of fifty percent. Since the total length is constant, the pulse waveform table 160 may store either a list of duty cycles, or a list of pulse lengths of the high intervals of the pulse waveforms. As shown in FIG. 13, for each pulse waveform 161, 162, 163, the signal table 158 also stores an input or output setting.

The fifth example operates in essentially the same way as the fourth example. During the initialization interval, the signal detector 156 detects the pulse waveform of the output signal 154, and sets the switch 112 as specified in the signal table 158. In the present case, the signal generator 152 generates the second pulse waveform 162, which has a fifty-percent duty cycle, and the signal detector 156 sets the switch 112 to the input position. An input device connected to the input-output device 155 would generate the first pulse waveform 161 (having a 25% duty cycle) or third pulse waveform 163 (having a 75% duty cycle) during the initialization interval, causing the signal detector 156 to set the switch 112 to the output position.

The fifth example provides the same effects as the fourth example.

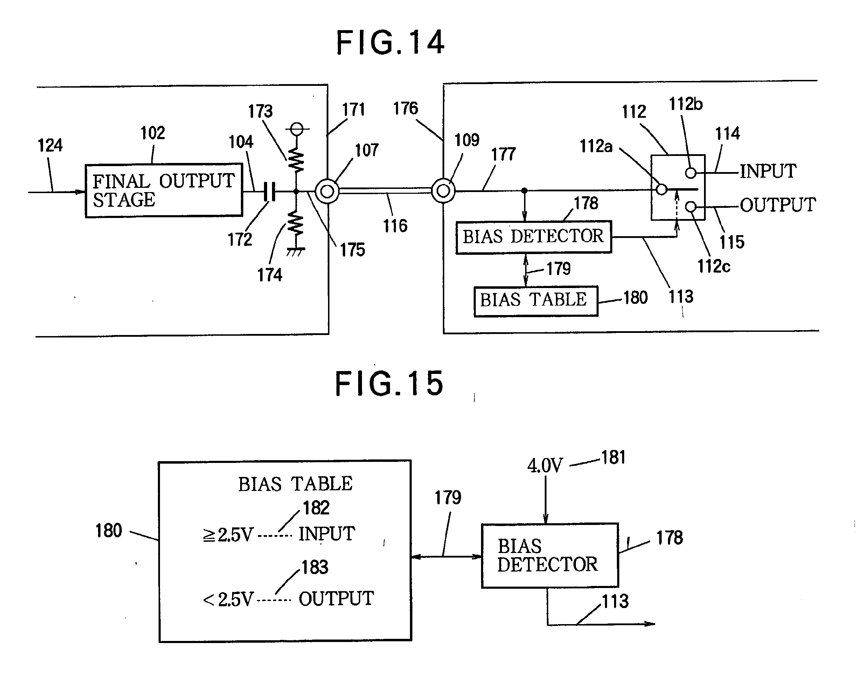

Illustrating an sixth example, FIG. 14 shows another output device and input-output device generally similar to those in the third example. The output device 171, however, couples the final output stage 102 to the output terminal 107 through a capacitor 172, and also provides a constant direct-current (DC) bias voltage to the output terminal 107, the bias voltage being generated by a pair of resistors 173, 174. In the output signal 175, the output signal 104 output by the final output stage 102 is superimposed on the DC bias voltage.

The input-output device 176 supplies the signal 177 received at the input-output terminal 109 to a bias detector 178 that recognizes the DC bias. The bias detector 178 communicates through a signal line 179 with a bias table 180 that lists bias conditions and corresponding switch settings.

In the present example, the resistors 173, 174 generate a DC bias of four volts (4.0 V) 181, as indicated in FIG. 15. The bias table 180 specifies input for bias values 182 equal to or greater than 2.5 V, and output for bias values less than 2.5 V.

In the sixth example, there is no initialization interval. The bias detector 178 detects the DC bias of the input signal 177, and sets the switch 112 according to the conditions listed in the bias table 180. In the present case, the bias detector 178 detects a DC bias 181 of 4.0 V, recognizes that this is greater than 2.5 V, and sets the switch 112 to the input position. An input device connected to the input-output device 176 would generate a DC bias of, for example one volt (1.0 V), causing the bias detector 178 to set the switch 112 to the output position.

The sixth example provides effects similar to those of the third, fourth and fifth, without requiring an initialization interval.

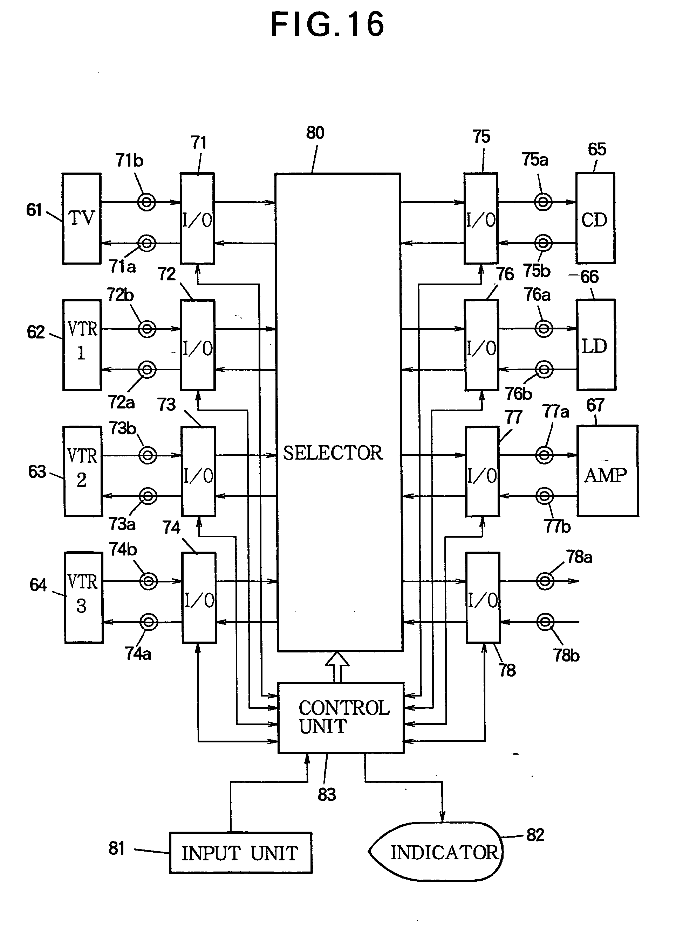

Illustrating a seventh example, FIG. 16 shows an audio-visual system with seven audio-visual devices, including a television set 61, three video tape recorders (VTRs) 62, 63, 64, a compact-disc (CD) player 65, a laser-disc (LD) player 66, and an audio amplifier (AMP) 67, which are coupled through respective input-output (I/O) circuits 71, 72, 73, 74, 75, 76, 77, 78 to a selector 80. (Input-output circuit 78 is not connected to any audio-visual device.) Also shown are an input unit 81, an indicator 82, and a control unit 83. The input unit 81 is, for example, a keyboard or pushbutton panel. The indicator 82 is, for example, a liquid crystal display (LCD) or some other type of flat panel display, or a display area on a computer screen. The control unit 83 is, for example, a microprocessor or microcontroller. The input-output circuits 71 to 78, selector 80, input unit 81, indicator 82, and control unit 83 constitute an audio/video switcher.

For each input-output circuit, the drawing shows a generic input terminal and a generic output terminal. For example, a generic output terminal 71a and generic input terminal 71b are shown for the first input-output circuit 71. This merely indicates that each input-output circuit may have both input and output connections to the same audio-visual device, and does not indicate the actual number of physical terminals, or imply that a given terminal is restricted to input or output. Typically, each input-output circuit has at least six terminals, each of which can be used for either input or output.

Not all of the input and output connections shown in the drawing need actually be made.

The audio-visual devices 61 to 67, like the devices 101, 131, 151, 171 in the third to sixth examples, generate identification signals. Any one of the identification schemes described in those examples may be used (frequency, pulse code, pulse length, or DC bias), the same scheme being used by all of the audio-visual devices. The identification signals identify both the signal type and the signal direction. The signal type indicates, for example, video, left-channel audio, or right-channel audio. The signal direction indicates input or output. Each signal input or output by each audio-visual device has its own identification signal generator and identification signal.

The input-output circuits 71 to 78 have signal detectors for detecting the identification signals, switches for selecting the signal direction as illustrated in the third to sixth examples, and further switches (not illustrated) for routing each type of signal to an appropriate signal port in the selector 80. For example, a left-channel audio input signal is routed to a left-channel audio input port of the selector 80. The input-output circuits 71 to 78 also furnish the identifying information detected by the signal detectors to the control unit 83.

To set up the system, the user connects each audio-visual device to an input-output circuit by the necessary number of cables. The necessary number of cables varies from two for the audio amplifier 67, which receives only two audio input signals, to as many as six for devices providing input and output of both audio and video signals. The user does not have to keep track of the type of signal carried by each cable or differentiate between input and output cables, because the correct interconnections will be made by the input-output circuits themselves. The user only has to make sure that all cables from the same audio-visual device are connected to the same input-output circuit. This is not difficult when the audio-visual devices are connected one at a time.

As each audio-visual device is connected, the user uses the input unit 81 to enter the name of the audio-visual device and indicate the input-output circuit to which its cables are connected. When all of the audio-visual devices have been connected, the user uses the input unit 81 to specify the interconnections to be made through the selector 80. In the present case, the user specifies a destination for the output of each of the first six audio-visual devices 61 to 66. The control unit 83 controls the selector 80 to make the specified interconnections, as in a conventional audio/video switcher.

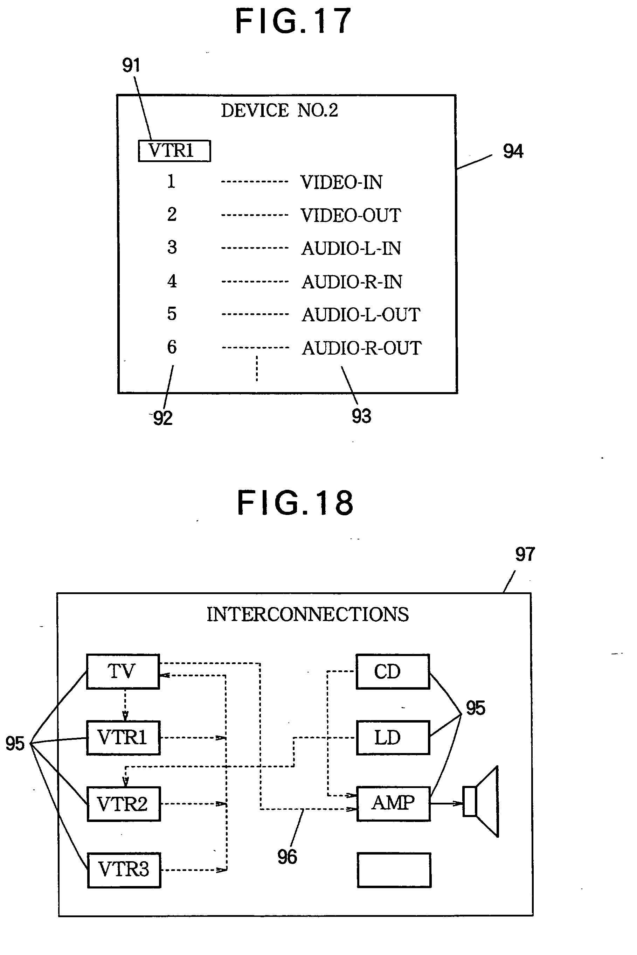

After connecting the cables, the user can verify the cable connections by commanding the control unit 83 to display the connection status of each input-output circuit. The user enters a command on the input unit 81, giving the number of the input-output circuit to be checked. Using the device-name information provided by the user and the identification-signal information provided by the input-output circuit, the control unit 83 generates a connection status display on the indicator 82, either by generating display data that are converted to driving signals for the indicator 82, or by generating the driving signals directly. FIG. 17 shows an example of a connection status display for the second input-output circuit 72. The display comprises the device name 91, a numbered list of terminals 92 of the input-output circuit 72, and a list of the corresponding signals 93. From this display 94, the user can readily confirm that the first video tape recorder 62 is correctly connected to the second input-output circuit 72.

The user can also command the control unit 83 to display the interconnections between the audio-visual devices. The control unit 83 then generates a display such as the one in FIG. 18, indicating the devices 95 by their device names and the interconnections by arrows 96. From this display 97, the user can easily see how the devices are interconnected. To make the display 97 easier to read, the control unit 83 may add icons such as the loudspeaker symbol attached to the amplifier device.

The seventh example provides an audio/video switcher that simplifies the interconnection process by relieving the user of the need to identify the individual cables connected to an audio-visual device. This is a particular advantage when the cables are long, and are routed behind furniture or in other hard-to-see locations.

The displays 94 and 97 in FIGs. 17 and 18 provide quick confirmation that the desired cable connections and interconnections have been made.

The displays 94 and 97 in FIGs. 17 and 18 are also useful in troubleshooting. For example, if a malfunction is caused by a bad electrical contact between a cable and a terminal, the user can use these displays to identify the cable quickly.

In a variation of the seventh example, the audio-visual devices provide identification signals only for output signals. For input signals, the audio-visual devices have input circuits similar to the ones in the first or second, that identify the incoming signals and route the signals to the appropriate signal-processing circuits. For these input signals, the control unit 83 can still generate a connection status display like the one in FIG. 17, obtaining the signal names from the identification information provided by the input-output circuit connected to the audio-visual device from which the signals were originally output.

In a further variation of this variation, the input-output circuits 71 to 78 have output circuits of the type shown in the first or second embodiment, which measure the impedance of the connected load, enabling the control unit 83 to determine whether a device is actually connected to each terminal being used for signal output, despite the lack of an identification signal. An impedance-matching or level-matching function may also be provided, as in the second embodiment.

The invention has been described in relation to interconnections between audio-visual devices, but applications in other types of electronic devices are also possible.

Those skilled in the art will recognize that further variations of the embodiments described above are possible within the scope claimed below.

## Claims

1. An interconnecting circuit for an electronic device, having an output terminal (8) for transmission of a signal received from said electronic device at an input terminal (1) to an external device (11), a detector for detecting an impedance of said external device, the detector including a muting circuit (3) connected between input terminal (1) and output terminal (8) that normally outputs said signal with a first impedance when said muting circuit (3) is de-activated but can be set to mute said signal so that said signal is not output when said muting circuit (3) is activated, and an impedance measuring circuit (5, 6, 16) for measuring the impedance of said external device (11) including a test signal generator (5) for supplying a test signal to said output terminal (8) and a signal detector (6) for detecting a resulting signal-level at said output terminal when the muting circuit is activated, **characterized in that**:
the interconnecting circuit also has an impedance conversion circuit (17) receiving the test signal from the test signal generator (5) when the muting circuit (3) is activated and receiving said signal from the muting circuit (3) when the muting circuit is de-activated for output of said signal with a second impedance differing from the first impedance; and the detector also includes a switch (15) for connecting said output terminal (8) to said muting circuit (3) if the measured impedance of the external device (11) is equal to the first impedance, and connecting said output terminal (8) to said conversion circuit (17) if the measured impedance of the external device (11) differs from the first impedance.

2. The interconnecting circuit of claim 1, wherein the second impedance is fixed.

3. The interconnecting circuit of claim 1, wherein the second impedance is selectable from a plurality of fixed impedances.

4. The interconnecting circuit of claim 1, wherein the second impedance is adjustable to match the measured impedance of the external device (11).

5. The interconnecting circuit of claim 1, 2, 3 or 4, further comprising an indicator (14) for displaying a result of the impedance measurement made by the impedance measuring circuit.

## Patentansprüche

1. Durchverbindungsschaltung für eine elektronische Vorrichtung, mit einem Ausgangsanschluss (8) für die Übertragung eines von der elektronischen Vorrichtung an einem Eingangsanschluss (1) empfangenen Signals zu einer externen Vorrichtung (11), einem Detektor zum Erfassen einer Impedanz der externen Vorrichtung, welcher Detektor eine Sperrschaltung (3) enthält, die zwischen den Eingangsanschluss (1) und den Ausgangsanschluss (8) geschaltet ist, der normalerweise das Signal mit einer ersten Impedanz ausgibt, wenn die Sperrschaltung (3) deaktiviert ist, aber gesetzt werden kann, um das Signal zu sperren, so dass das Signal nicht ausgegeben wird, wenn die Sperrschaltung (3) aktiviert ist, und einer Impedanzmessschaltung (5, 6, 16) zum Messen der Impedanz der externen Vorrichtung (11), enthaltend einen Prüfsignalgenerator (5) zum Zuführen eines Prüfsignals zu dem Ausgangsanschluss (8) und einen Signaldetektor (6) zum Erfassen eines sich ergebenden Signalpegels an dem Ausgangsanschluss, wenn die Sperrschaltung aktiviert ist, **dadurch gekennzeichnet, dass**:
die Durchverbindungsschaltung auch eine Impedanzumwandlungsschaltung (17) hat, die das Prüfsignal von dem Prüfsignalgenerator (5) empfängt, wenn die Sperrschaltung (3) aktiviert ist, und das Signal von der Sperrschaltung (3) empfängt, wenn die Sperrschaltung deaktiviert ist, für die Ausgabe dieses Signals mit einer zweiten Impedanz, die sich von der ersten Impedanz unterscheidet; und der Detektor auch einen Schalter (15) zum Verbinden des Ausgangsanschlusses (8) mit der Sperrschaltung (3), wenn die gemessene Impedanz der externen Vorrichtung (3) gleich der ersten Impedanz ist, und zum Verbinden des Ausgangsanschlusses (8) mit der Umwandlungsschaltung (17), wenn die gemessene Impedanz der gemessenen Vorrichtung (11) sich von der ersten Impedanz unterscheidet, enthält.

2. Durchverbindungsschaltung nach Anspruch 1, bei der die zweite Impedanz festgelegt ist.

3. Durchverbindungsschaltung nach Anspruch 1, bei der die zweite Impedanz aus mehreren festgelegten Impedanzen auswählbar ist.

4. Durchverbindungsschaltung nach Anspruch 1, bei der die zweite Impedanz einstellbar ist, um der gemessenen Impedanz der gemessenen Vorrichtung (11) angepasst zu werden.

5. Durchverbindungsschaltung nach Anspruch 1, 2, 3 oder 4, weiterhin aufweisend eine Anzeigevorrichtung (14) zum Darstellen eines Ergebnisses der von der Impedanzmessschaltung durchgeführten Impedanzmessung.

## Revendications

1. Circuit d'interconnexion destiné à un dispositif électronique, ayant une borne de sortie (8) pour transmettre un signal reçu en provenance dudit dispositif électronique au niveau d'une borne d'entrée (1) à un dispositif extérieur (11), un détecteur pour détecter une impédance dudit dispositif extérieur, le détecteur comprenant un silencieux (3) connecté entre la borne d'entrée (1) et la borne de sortie (8) qui délivre normalement en sortie ledit signal avec une première impédance lorsque ledit silencieux (3) est mis hors service, mais qui peut être réglé pour rendre silencieux ledit signal, de telle sorte que ledit signal ne puisse pas être délivré en sortie lorsque ledit silencieux (3) est mis en service, et un circuit de mesure d'impédance (5, 6, 16) pour mesurer l'impédance dudit dispositif extérieur (11) comprenant un générateur de signal de test (5) pour fournir un signal de test à ladite borne de sortie (8) et un détecteur de signal (6) pour détecter un niveau de signal résultant au niveau de ladite borne de sortie lorsque le silencieux est mis en service,
**caractérisé en ce que** :
le circuit d'interconnexion possède également un circuit de conversion d'impédance (17) qui reçoit le signal de test en provenance du générateur de signal de test (5) lorsque le silencieux (3) est mis en service, et qui reçoit ledit signal provenant du silencieux (3) lorsque le silencieux est mis hors service pour délivrer ledit signal avec une deuxième impédance différente de la première impédance ; et le détecteur comprend également un commutateur (15) pour connecter ladite borne de sortie (8) audit silencieux (3) si l'impédance mesurée du dispositif extérieur (11) est égale à la première impédance, et pour connecter ladite borne de sortie (8) audit circuit de conversion (17) si l'impédance mesurée du dispositif extérieur (11) diffère de la première impédance.

2. Circuit d'interconnexion selon la revendication 1, dans lequel la deuxième impédance est fixe.

3. Circuit d'interconnexion selon la revendication 1, dans lequel la deuxième impédance peut être sélectionnée à partir d'une pluralité d'impédances fixes.

4. Circuit d'interconnexion selon la revendication 1, dans lequel la deuxième impédance peut être réglée pour s'adapter à l'impédance mesurée du dispositif extérieur (11).

5. Circuit d'interconnexion selon l'une quelconque des revendications 1, 2, 3 ou 4, comprenant de plus un indicateur (14) pour afficher un résultat de la mesure d'impédance effectuée par le circuit de mesure d'impédance.
